# EUROPEAN PATENT APPLICATION

(11) **EP 2 077 381 A1**
(43) Date of publication of application: **08.07.2009**
(21) Application number: 08100034.1
(22) Date of filing: 03.01.2008
(51) Int. Cl.: F02D 19/02, F02M 21/02, F02D 41/00

(54) **A device for supplying fuel to a combustion engine, method for operating the said device and device to control the operation of a combustion engine**

(71) Applicant: ROBERT BOSCH GMBH, 70442 Stuttgart (DE)
(72) Inventor: Tafel, Stephan, 70825, Korntal-Muenchingen (DE); Lechler, Andreas, 71665, Vaihingen/Enz (DE)

(57) **Abstract**

The invention relates to a device and a method used to supply fuel to a combustion engine. The method involves opening the gas injector to inject gas fuel into a combustion engine, opening the switching valve when the pressure in the injector volume falls below a first pressure and closing the switching valve when the pressure in the volume exceeds a second pressure, the second pressure being higher than the first pressure.

## Description

### State of the Art

The invention relates to a method and a device for supplying fuel to a fuel injection system of an internal combustion engine according to the preamble of the independent claims.

The working of an internal combustion engine which uses gas as fuel is known as state of the art. The gas is stored under high pressure of about 20 Mpa, in a fuel tank of a vehicle. The high pressure gas from the fuel tank is supplied through fuel path to a pressure regulator which regulates the fuel pressure to a working pressure of about 0.5 to 0.8 Mpa. The new injection systems use a working pressure of about 2 to 3 Mpa. The fuel with lower pressure is supplied to the fuel injectors which supply the combustion cylinder with the required amount of fuel for combustion.

There are different kinds of pressure regulators used in the engines; however the pressure regulators are predominantly made of mechanical components using springs.
The operation of the pressure regulators is achieved by balancing the pressure forces against the spring tension. The pressure regulators remain open and allow fuel to flow from high pressure area to low pressure area and once the low pressure area gains pressure, the valve closes because of the tension in the spring.

In the above mentioned pressure regulator, the preliminary tension of the spring is adjusted manually. With this, the working pressure is constantly maintained and can not be changed during the operation of the engine. If the working pressure needs to be changed, the setting of the pressure regulator needs to be changed manually, which involves high effort and cost.

Also these kinds of pressure regulators are proportional opening valves.

The patent application DE 10 2004 060 905 A1 discloses a pressure regulator for a fuel injection system in which the level of pressure can be freely chosen by applying a control signal.

### Advantages of the invention

The method and the device according to the independent patent claims have the below mentioned advantages

The invention provides a compact fuel supply device, comprising a switching valve, a gas injector and an injector volume which are simple and accurate devices to reduce the pressure and inject the fuel into the combustion engine. Also the switching valve, gas injector and the injector volume can be integrated into a single unit.

Further improvements and/or advantages are realised by the features of the dependent patent claims.

One of the problems observed with the state of the art fuel supply device is, when the high pressure of the gas fuel is reduced, the gas forms a layer of ice on the components, which will lead to malfunctioning of the same. The invention proposes the fuel supply device in which the switching valve will be closer to the gas injector which in turn is near the combustion cylinder and because of the warmth of the cylinder, ice formation on the components will be avoided. This in turn will eliminate the necessity of having heating elements in the fuel supply device which are needed for the devices available as state of the art.

Also because of the gas fuel, the switching valve seat should be made of elastomeric material to make it leak proof. The fuel supply device will be so positioned that the warmth of the combustion cylinder will not deteriorate the functioning of the elastomeric seat forming part of valve.

By varying the working pressure based on the engine operating conditions, the engine performance is optimized, because the engine at higher speed and higher load needs higher fuel quantity which can be achieved by having more pressure in the injector volume. Similarly the engine at lower speed and low load may need lower fuel quantity which can be achieved by having lesser pressure in the injector volume.

With the invention, the range within which the working pressure needs to be maintained can be easily varied by the electronic control unit which controls the engine and other components, thereby eliminating the effort and cost involved in manually changing the settings of pressure regulator in the state of the art.

The switching valve can be in only two states namely fully open and fully closed. So the control circuit to operate the switching valve is simple. The switching valve can be operated by using a control signal with two voltage levels.

With the invention, it is not necessary to have a fuel rail, as the high pressure fuel supply reaches the fuel supply device directly. Based on the need, an additional volume can be included in the fuel supply device.

### Brief descriptions of the drawings

- Figure 1: shows the schematic view of a fuel injection system and com- bustion engine, comprising gas fuel tank, fuel pipe, fuel supply device, combustion cylinder and electronic control unit,
- Figure 2: shows the fuel supply device in detail,
- Figure 3: shows the schematic view similar to figure 1, with additional injector volume,

Figure 4 and figure 5 show the operating principle of the invention.

### Description of the embodiments

This invention deals with a fuel supply device which reduces the working pressure of gas fuel to a level which is between two pressure levels set by the ECU, before injecting the gas fuel into the intake manifold of a combustion engine.

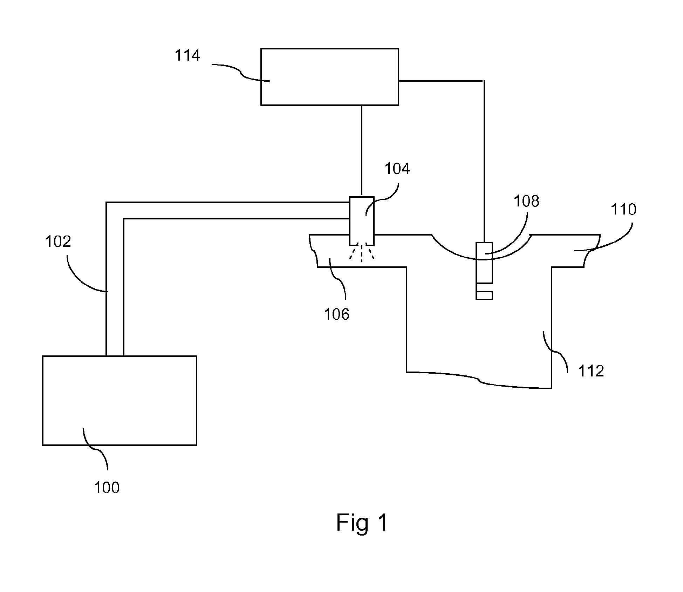

The figure 1 shows schematic view of a combustion engine with gas fuel injection system.

Shown in the figure is a high pressure gas fuel tank 100 connected to the fuel supply device 104 through a fuel pipe 102. Reference number 112 is a combustion cylinder with intake manifold 106, exhaust channel 110 and a spark plug 108. An electronic control unit 114 referred to as ECU, has control lines connected to fuel supply device 104 and to a spark plug 108. The ECU 114 controls the combustion engine 112 and the fuel supply device 104.

The fuel from the high pressure gas fuel tank 100 is delivered through the fuel path 102, to the fuel supply device 104. Part of the fuel supply device 104 is in the intake manifold for injecting gas into the manifold. The fuel supply device 104 reduces the high pressure of the fuel coming from the fuel path 102, to a working pressure which is between two pressure levels set by the ECU 114. After reducing the pressure, the fuel supply device 104, injects the fuel into an intake manifold 106. The fuel is mixed with air in the intake manifold. The air fuel mixture is compressed in the combustion chamber 112 and then the spark plug 108 ignites the fuel. The air fuel mixture is burnt and thereby the pressure in the combustion chamber becomes high and it is converted into kinetic energy for the motion of a vehicle. The residual gases of the combustion are sent out through the exhaust channel 110.

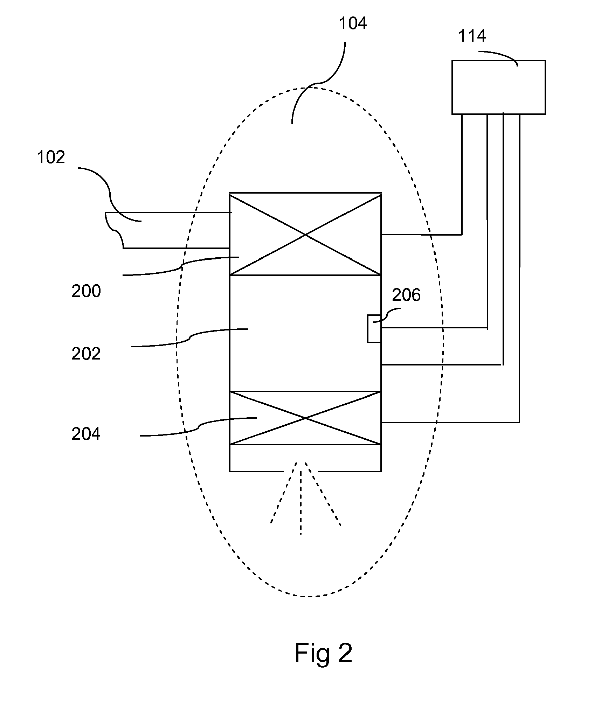

The figure 2 shows schematic view of a fuel supply device in detail.

The fuel supply device 104 comprises of a switching valve 200, an injector volume 202 and a gas injector 204. The switching valve 200 is supplied with high pressure fuel through a fuel pipe 102. The switching valve 200 reduces the high pressure of the fuel to a working pressure which is lower and which lies within two pressure levels, minimum pressure and maximum pressure set by the ECU 114.

The pressure in the injector volume 202 is monitored by the ECU 114, using a pressure sensor 206 which is not part of the device when it is sold. The pressure sensor may be supplied by an external supplier and there is a possibility to connect the pressure sensor to the fuel supply device 104.

The switching valve 200 is an on-off valve. It has only two states, named fully closed and fully open. There is no proportional opening. The switching valve is operated by using a control signal with two voltage levels, generated by the ECU 114. The high level of the signal opens the switching valve fully and low level closes the switching valve fully.

The ECU 114 sets the range of the working pressure, i.e. minimum pressure level and maximum pressure level, to be maintained in the injector volume 202. A pressure sensor which is not shown in the figure, in the fuel path 102 gives the information on high pressure and a pressure sensor which is not part of the device, in the injector volume 202 gives information on the working pressure to the ECU 114. The ECU 114 continuously monitors the high pressure in the pressure tank 100 and the working pressure in the injector volume 202. When the working pressure in the injector volume 202 level reaches minimum volume level set by the ECU 114, the switching valve 200 is opened using a control signal, so that the fuel from high pressure fuel tank is supplied to injector volume, thus increasing the working pressure in the injector volume. Similarly, when the working pressure in the injector volume reaches maximum pressure level, the switching valve is closed using the same control signal, stopping the fuel from high pressure fuel tank to the injector volume.

The ECU 114 controls the components of the injection system. It generates control signals for switching valve 200 for opening and closing, for gas injector 204 for injecting the gas and for spark plug 108 for igniting the air fuel mixture.

The injector volume 202 is relatively smaller, just enough to store fuel for few injections. When the engine speed is high, the engine needs more fuel to be injected into the combustion cylinder. So the fuel in the injector volume 202 is consumed fast by the gas injector 204 resulting in frequent opening of the switching valve 200 to allow fuel supply from the fuel tank 100 to the injector volume 202 to maintain the working pressure in a given range. This frequent opening and closing of the switching valve will affect the performance of the engine.

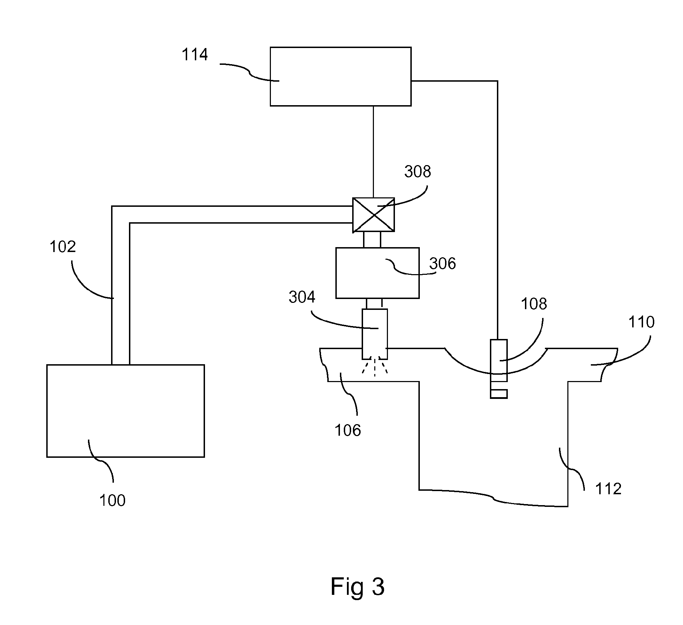

To avoid frequent opening and closing of the switching valve, another embodiment is shown in figure 3.

Figure 3 shows gas fuel tank 100, fuel path 102, a switching valve 308, an additional volume 306 and a gas injector 304. 112 is a combustion cylinder with intake manifold 106, exhaust path 110, a spark plug 108 and gas injector 304 in the intake manifold 106. An electronic control unit 114 referred as ECU, controls the components of the fuel injection system.

The functioning of this embodiment is same as explained with figure 1, the difference being, the switching valve, the injector volume and gas injector are independent units.

Here the additional injector volume 306 stores relatively more fuel compared to the injector volume 202. The fuel in the additional volume lasts for more number of fuel injections compared to the first embodiment, eliminating the need to open and close the switching valve 308 frequently. Thus the performance of the engine is improved because the fuel injectors can inject the fuel more frequently when the engine speed is high.

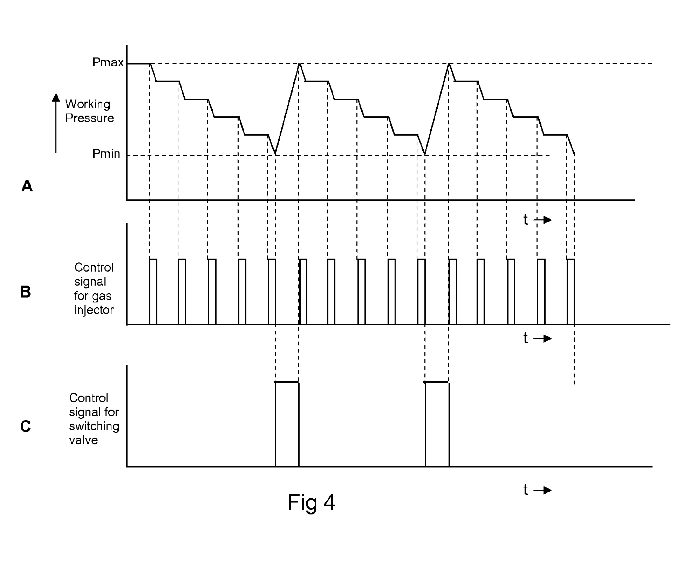

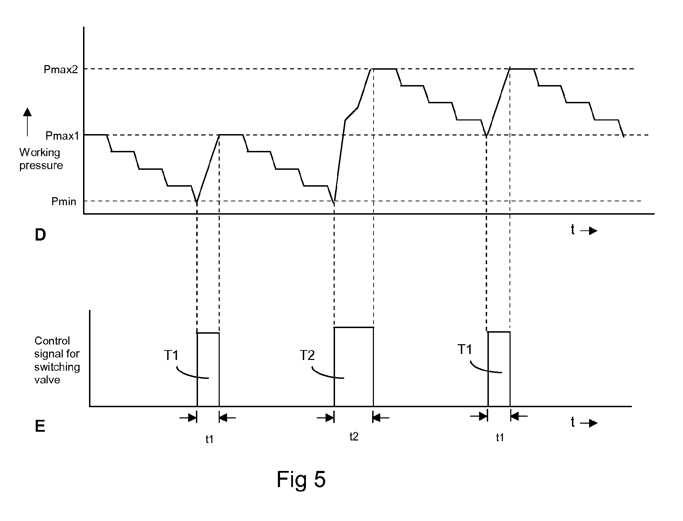

Figure 4 and 5 show the operation of the fuel supply device according to the invention.

In fig 4, graph A shows the working pressure in the injector volume 202 versus time. The graph also shows the minimum pressure Pmin and maximum pressure Pmax levels maintained in the injector volume. These levels are set by the ECU.

Graph B shows the pulses used to operate the gas injector 204. The rising edge of the pulse starts the fuel injection from the gas injector 204, when the voltage is high the gas injector is open and falling edge stops the fuel injection from the gas injector 204 by closing the gas injector. The gas injector has a solenoid or piezo which generates a force when voltage is applied and the force operates the gas injector.

With each pulse, the gas injector 204 injects the fuel into the intake manifold 106. With each injection of the fuel, the pressure in the injector volume 202 reduces, as shown in graph A.

When the working pressure in the injector volume reaches the minimum pressure level Pmin, the switching valve 200 is opened by ECU using a control signal as shown in graph C. With the switching valve 200 open, the working pressure in the injector volume 202 rises again as shown in graph A. When the working pressure in the injector volume 202 reaches a maximum pressure level Pmax, the switching valve 200 is closed using the control signal. Alternatively the opening time for switching valve 200 may be computed by a function, depending on the tank pressure and the wanted high pressure value.

The graph A shows the switching valve 200 operating within pressure levels, Pmin and Pmax. Based on the engine operating conditions, ECU may vary the operating range of the switching valve 200, i.e. the Pmin and Pmax levels may have new values. Graph D in figure 5 shows such a case.

Initially the switching valve 200 is operating between the pressure levels Pmin and Pmax1 as shown in graph D, with the control signal T1 as shown in graph E. When the ECU need for fuel might require too long injection time for a given pressure in injector volume, then the pressure in the injector volume needs to be increased to operate between Pmax1 and Pmax2. The ECU makes the control signal T2 high which will open the switching valve 200 allowing the fuel from high pressure fuel tank 100 into the injector volume 202. The pressure in the injector volume 202 keeps increasing. The ECU 114 keeps monitoring the pressure in the injector volume 202 and when the pressure in the injector volume 202 reaches Pmax2, the control signal T2 is made low, closing the switching valve 200. Alternatively the opening time for switching valve 200 may be computed by a function, depending on the tank pressure and the wanted high pressure value.

Now the switching valve 200 will operate with a new range of working pressure levels Pmax1 and Pmax2.

The working pressure needs to be adapted to the operating conditions of the engine in order to operate the engine for optimal performance. The parameters affecting the working pressure are engine speed, engine load, amount of fuel in fuel tank etc. In the state of the art, it was not possible to vary the working pressure during the operation of the engine.

Varying the working pressure in a fuel injector, according to the operating conditions of the engine, is advantageous. For example, a high working pressure can be of advantage when the vehicle speed is high and engine load is high, to supply sufficient amount of fuel to the combustion cylinders, within a very short time, on account of high speed operation of the cylinders.

On the other hand, when the fuel tank filling is lower, a lower working pressure could help the vehicle to cover more distance by drawing more fuel from the tank.
Ex. When the fuel tank filling is low, the pressure in the gas tank will be low. If the working pressure in the injector volume is more, the gas will not flow from the gas tank to the injector volume. So to use the fuel in the gas tank, the pressure in the injector volume needs to be sufficiently low so that the gas from the fuel tank flows into the injector volume.

The working pressure is easily maintained within given range by control signal from the ECU. Whenever the working pressure needs to be increased to a given value, the ECU makes the control signal high till the working pressure reaches the given value and then the control signal is made low

In this way the invention provides a simple device and a simple method to vary the working pressure in an injector volume.

## Claims

1. A fuel supply device for supplying gas fuel to a combustion engine, **characterised by**, a switching valve ( 200 ), a gas injector ( 204 ) and an injector volume ( 202 ), the switching valve operating in dependence of pressure in the injector volume, the switching valve being able to receive fuel from a high pressure gas fuel tank, reduce the pressure to a working pressure which is lower compared to gas fuel tank pressure and deliver the fuel to the injector volume, the gas injector being capable of receiving gas fuel from injector volume and injecting the fuel into a combustion engine.

2. A fuel supply device according to claim 1 **characterised by**, the switching valve which is an on-off valve having only two states namely fully closed and fully open.

3. A fuel supply device according to claim 1 **characterised by**, the switching valve, the injector volume and the gas injector being integrated into a single unit.

4. A fuel supply device according to claim 1 **characterised by**, the switching valve, the injector volume and the gas injector can be separate units.

5. A fuel supply device according to claim 1 **characterised by**, the switching valve whose seat is made of elastomeric material.

6. The fuel supply device as claimed in claim 5 can be so positioned from the combustion chamber that, the warmth of the combustion chamber will reduce ice formation on the device at lower pressures and the warmth of the combustion chamber will not deteriorate elastomeric parts of the switching valve.

7. Method to operate a fuel supply device comprising a gas injector connected to an injector volume, the injector volume being connected via a switching valve to a high pressure gas tank, comprising the steps of
- Opening the gas injector to inject gas fuel into a combustion engine and
- Opening the switching valve when the pressure in the injector volume falls below a first pressure
- and closing the switching valve when the pressure in the volume exceeds a second pressure, the second pressure being higher than the first pressure.

8. Method of claim 5, **characterized in that**, the first pressure and the second pressure are dependant on engine parameters like engine speed, engine load and amount of fuel in the tank.

9. Method of claim 5, **characterized in that**, the opening and closing of the switching valve is controlled using a control signal with two voltage levels.

10. Device to control the operation of a fuel supply device of a gas fuel operated internal combustion engine, **characterized by** means to open a gas injector to inject gas into the combustion engine, to open the switching valve when the pressure in the injector volume falls below a first pressure and closing the switching valve when the pressure in the injector volume exceeds a second pressure, the second pressure being higher than the first pressure.

## Amended claims

### Amended claims in accordance with Rule 137(2) EPC.

**1.** A fuel supply device for supplying gas fuel to a combustion engine comprising a switching valve (200), a gas injector (204) and an injector volume (202), the switching valve (200) operating in dependence of pressure in the injector volume (202), the switching valve (200) being able to receive fuel from a high pressure gas fuel tank, reduce the pressure to a working pressure which is lower compared to gas fuel tank pressure and deliver the fuel to the injector volume (202), the gas injector (204) being capable of receiving gas fuel from injector volume (202) and injecting the fuel into a combustion engine, **characterised in that**
- the switching valve (200), the gas injector (204) and the injector volume (202) being integrated into a single unit.

**2.** A fuel supply device according to claim 1 **characterised by** the switching valve which is an on-off valve having only two states namely fully closed and fully open.

**3.** A fuel supply device according to claim 1 **characterised by**, the switching valve whose seat is made of elastomeric material.

**4.** A fuel supply device according to claim 1 positioned close to the combustion chamber to avoid formation of ice on the device because of reduction in pressure of the gas fuel.

**5.** Method to operate a fuel supply device comprising a gas injector connected to an injector volume, the injector volume being connected via a switching valve to a high pressure gas tank, comprising the steps of
- Opening the gas injector to inject gas fuel into a combustion engine and
- Opening the switching valve when the pressure in the injector volume falls below a first pressure
- and closing the switching valve when the pressure in the volume exceeds a second pressure, the second pressure being higher than the first pressure.

**6.** Method of claim 5, **characterized in that**, the first pressure and the second pressure are dependant on engine parameters like engine speed, engine load and amount of fuel in the tank.

**7.** Method of claim 5, **characterized in that**, the opening and closing of the switching valve is controlled using a control signal with two voltage levels.

**8.** Device to control the operation of a fuel supply device of a gas fuel operated internal combustion engine, **characterized by** means to open a gas injector to inject gas ' into the combustion engine, to open the switching valve when the pressure in the injector volume falls below a first pressure and closing the switching valve when the pressure in the injector volume exceeds a second pressure, the second pressure being higher than the first pressure.
